# EUROPÄISCHE PATENTANMELDUNG

(11) **EP 1 120 316 A2**
(43) Veröffentlichungstag der Anmeldung: **01.08.2001**
(21) Anmeldenummer: 01101925.4
(22) Anmeldetag: 29.01.2001
(51) Int. Cl.: B60R 13/10

(54) **Plakette, insbesondere Zulassungs-, Prüf-, Siegel- oder Mautplakette vorzugsweise für Kraftfahrzeuge**

(30) Priorität: 28.01.2000 DE 10003881
(71) Anmelder: Witte plusprint Druckmedien GmbH, 48163 Münster (DE)
(72) Erfinder: Kunz, Otmar-Jürgen, 48308 Senden (DE); Museler, Matthias, 48157 Münster (DE)
(74) Vertreter: Linnemann, Winfried

(57) **Zusammenfassung**

Die vorliegende Erfindung betrifft eine Plakette (1), insbesondere Zulassungs-, Prüf-, Siegel- oder Mautplakette vorzugsweise für Kraftfahrzeuge, bestehend aus einer Trägerschicht (10) aus Kunststoff, einer darauf mindestens einseitig aufgebrachten ein- oder mehrfarbigen Bedruckung und/oder Beschriftung (11) und aus einer rück- oder vorderseitig angeordneten Klebstoffschicht (12), mit der die Plakette (1) an einer Anbringungsfläche anklebbar ist.

Die erfindungsgemäße Plakette ist dadurch gekennzeichnet, daß in die Plakette (1) ein Transponder (15) mit einem kontaktlos elektronisch auslesbaren Datenspeicher (16) integriert ist.

## Beschreibung

Die vorliegend Erfindung betrifft eine Plakette, insbesondere Zulassungs-, Prüf-, Siegel- oder Mautplakette vorzugsweise für Kraftfahrzeuge, bestehend aus einer Trägerschicht aus Kunststoff, einer darauf mindestens einseitig aufgebrachten ein- oder mehrfarbigen Bedruckung und/oder Beschriftung und aus einer rück- oder vorderseitig angeordneten Klebstoffschicht, mit der die Plakette an einer Anbringungsfläche anklebbar ist.

Plaketten der genannten Art sind in unterschiedlichen Ausführungen aus der Praxis bekannt. Da die Plaketten häufig für behördliche oder ähnliche offizielle Zwecke verwendet werden, sollen die Plaketten möglichst manipulations- und fälschungssicher sein. Eine solche Plakette ist beispielsweise aus der EP 0 581 030 B1 bekannt. Diese bekannte Plakette besteht aus einer Trägerfolie, auf die ein Kennzeichnungsaufdruck, ein Raster und eine Farbschicht aufgedruckt sind, wobei diese Schichten durch eine Kleberschicht abgedeckt sind. Zur Erzielung der Fälschungssicherheit dieser Plakette ist weiter vorgesehen, daß die Farbschicht in einem zu dem Raster komplementären Muster unterbrochen ist.

Diese Plakette ist zwar in hohem Maße fälschungssicher, weil sie praktisch nicht beschädigungsfrei von einer Anbringungsfläche abgehoben und in betrügerischer Absicht an einer anderen Stelle neu angebracht werden kann, jedoch ist bei dieser Plakette nicht ausgeschlossen, daß sie komplett von Unbefugten nachgemacht und hergestellt wird und dann über illegale Wege in den Verkehr gebracht wird.

Für die vorliegende Erfindung stellt sich deshalb die Aufgabe, eine Plakette der eingangs genannten Art zu schaffen, die nicht nur manipulations- und fälschungs-sicher ist, sondern bei der auch eine Nachahmung und Herstellung durch Unbefugte unmöglich oder zumindest sehr erschwert ist. Außerdem soll die neue Plakette zusätzliche Nutzungsmöglichkeiten bieten.

Die Lösung dieser Aufgabe gelingt erfindungsgemäß durch eine Plakette der eingangs genannten Art, die dadurch gekennzeichnet ist, daß in die Plakette ein Transponder mit einem kontaktlos elektronisch auslesbaren Datenspeicher integriert ist.

Mit der Erfindung wird erreicht, daß die Plakette praktisch nicht mehr von Unbefugten nachgemacht und hergestellt werden kann oder daß zumindest unbefugt hergestellte Plaketten schnell erkennbar sind, indem die auslesbaren Daten aus dem Datenspeicher überprüft und z.B. mit an einer zentralen offiziellen Stelle hinterlegten, nicht allgemein zugänglichen Kontrolldaten verglichen werden. Zugleich kann der Transponder für weitere Zwecke genutzt werden, z.B. für eine automatische Fahrzeugerkennung an Mautstellen zwecks Abrechnung von Mautgebühren, ohne daß das Fahrzeug an der Mautstelle anhalten muß. In der oben zitierten EP 0 581 030 B1 ist zwar ein Kennzeichnungsträger erwähnt, bei dem in mindestens einer seiner Schichten ein elektronisch programmierbares und/ oder lesbares Element angebracht ist, jedoch wird in dieser Schrift keinerlei praktikable Lösung offenbart.

Erst durch den erfindungsgemäß in die Plakette integrierten Transponder wird das Ziel erreicht, in der Plakette Daten speichern und bei Bedarf kontaktlos elektronisch auslesen zu können. Eine eigene Energieversorgung benötigt der Transponder nicht, da ihm die für einen Auslesevorgang erforderliche Energie von außen im Moment des Auslesens zugeführt wird, wie dies aus der Transpondertechnik aus anderen, allerdings entfernt liegenden Anwendungsgebieten an sich bekannt ist.

In einer ersten Ausführung der Plakette enthält der Datenspeicher eine nach ihrer Speicherung nicht löschbare feste Information. Der Datenspeicher und der Transponder insgesamt können dabei besonders einfach und damit auch besonders klein und kostengünstig ausgeführt werden, da sie nur relativ wenige Elemente umfassen.

Eine andere, erweiterte Ausführung der Plakette sieht vor, daß der Datenspeicher eine nach ihrer Speicherung löschbare oder überschreibbare oder veränderbare Information enthält. Hierdurch kann die Plakette zusätzliche Aufgaben und Funktionen übernehmen, die aber auch einen entsprechend leistungsfähigeren Transponder und Datenspeicher erfordern.

In einer weiteren, noch höheren Ausbaustufe der Plakette kann der Transponder ein aktives Rechnerelement, wie Mikrochip oder -prozessor, umfassen oder mit einem solchen, am oder nahe dem Anbringungsort der Plakette vorhandenen Rechnerelement oder Rechner, z.B. Kfz.-Bordrechner, verbunden oder verbindbar sein. Bei Bedarf kann hier auch eine Stromversorgung des Rechnerelements vorgesehen werden. Hierdurch sind zusätzliche Möglichkeiten für eine weitergehende Nutzung der Plakette gegeben, die die elektronischen Fähigkeiten eines Rechnerelements oder Rechners erfordern. Zu denken ist hier z.B. an eine automatische Strecken- und/oder Positionserfassung von Kraftfahrzeugen zur Be- und Abrechnung von Straßenbenutzungsgebühren. Vorteilhaft ist im Zusammenhang damit auch, daß bei Vergabe der Plakette durch eine Kfz.-Zulassungsbehörde jeder Besitzerwechsel eines Kraftfahrzeuges sofort und ohne jede Verzögerung bei der Abrechnung von Straßenbenutzungsgebühren berücksichtigt werden kann.

Damit die Plakette auch mit dem integrierten Transponder noch möglichst dünn bleibt und damit sie in herkömmlicher Weise gehandhabt werden kann, ist der Transponder zweckmäßig mechanisch flexibel in Dünnschichttechnik ausgeführt.

Für das Auslesen und gegebenenfalls Einlesen von Daten und für die Übertragung elektrischer Energie mittels Induktion umfaßt der Transponder zweckmäßig eine flache spulenförmige Antenne, die aufgrund dieser Formgebung problemlos ebenfalls in die flache Plakette integrierbar ist.

Eine besonders platzsparende Anordnung ergibt sich, wenn die Antenne den übrigen Transponder ringförmig umgibt.

Weiterhin ist vorgesehen, daß die Plakette einen oder mehrere Transponder und Antennen aus einer auf einem streifen- oder bahnförmigen Träger angebrachten, vorproduzierten endlosen Transponder-/ Antennen-Anordnung enthält. Hiermit lassen sich große Stückzahlen der Plakette sehr effektiv und wirtschaftlich herstellen, weil die Zuführung der Transponder und Antennen bei der Plakettenfertigung sehr einfach ist und sich problemlos in eine Fertigungseinrichtung für Plaketten integrieren läßt.

Besonders rationell kann die Plakette hergestellt werden, wenn der Transponder und/oder die Antenne drucktechnisch mittels elektrisch leitenden und/oder magnetische Eigenschaften aufweisenden Lacks auf wenigstens eine der Schichten der Plakette oder auf den streifen-oder bahnförmigen Träger aufgebracht sind/ist.

Zum Schutz des Transponders vor schädlichen äußeren Einflüssen ist dieser zweckmäßig zwischen wenigstens zwei Schichten der Plakette eingeschlossen.

Um die Plakette in der Praxis möglichst problemlos nutzen zu können, ist vorgesehen, daß die Information mittels stationärer oder mobiler Lese- oder Schreib-/Lese-Stationen aus dem Datenspeicher auslesbar oder in den Datenspeicher einschreibbar ist. Die erwähnten Stationen können beispielsweise bei Zulassungs- und Prüfstellen, bei Polizei- oder Zollbeamten oder auch fest an Mautstellen oder an anderen Orten vorgehalten und eingesetzt werden.

Zwecks Verhinderung von Manipulationen an der Plakette ist diese zweckmäßig so ausgeführt, daß bei einem Ablösen der Plakette von ihrer Anbringungsfläche oder des Transponders von der übrigen Plakette diese erkennbar und unumkehrbar mechanisch und/oder optisch verändert wird. Mittel zur Erzielung dieser erkennbaren und unumkehrbaren Veränderungen sind von einschlägigen Plaketten an sich bekannt und können auch bei der erfindungsgemäßen Plakette mit integriertem Transponder eingesetzt werden.

Zur Erhöhung der Fälschungs- und Manipulationssicherheit der Plakette kann diese mit einer zusätzlichen, unabhängig von Transponder ablesbaren individuellen Kennzeichnung versehen sein.

Bevorzugt ist die Kennzeichnung in Form eines Barcodes angebracht, der nur relativ wenig Platz auf der Plakette benötigt und der dennoch eine Vielzahl von Codierungsmöglichkeiten bietet. Außerdem sind Lesegeräte zum Ablesen eines Barcodes gängig und damit kostengünstig beschaffbar und einsetzbar. Dabei ist auch eine Kombination mit den Lese- oder Schreib-/Lese-Geräten für die Kommunikation mit dem Transponder denkbar.

Bevorzugte Ausführungen dieser zusätzlichen Kennzeichnung sind im Anspruch 15 angegeben.

Weiter ist für die zusätzliche Kennzeichnung bevorzugt vorgesehen, daß sie eine fortlaufende Numerierung ist oder enthält. Diese fortlaufende Numerierung kann zu Kontroll- oder Überprüfungszwecken herangezogen werden, indem die an einer Plakette festgestellte Kennzeichnung mit im Datenspeicher des Transponders gespeicherten Daten und/oder mit an einer zentralen Stelle hinterlegten Daten verglichen wird.

Zwei Ausführungsbeispiele der erindungsgemäßen Plakette werden im folgenden anhand einer Zeichnung erläutert. Die Figuren der Zeichnung zeigen:
- Figur 1: eine Plakette im Querschnitt in schematischer Darstellung, wobei die Darstellung zur Erhöhung der Erkennbarkeit nicht maßstäblich ist, und
- Figur 2: die Plakette in einer zweiten Ausführung in Draufsicht.

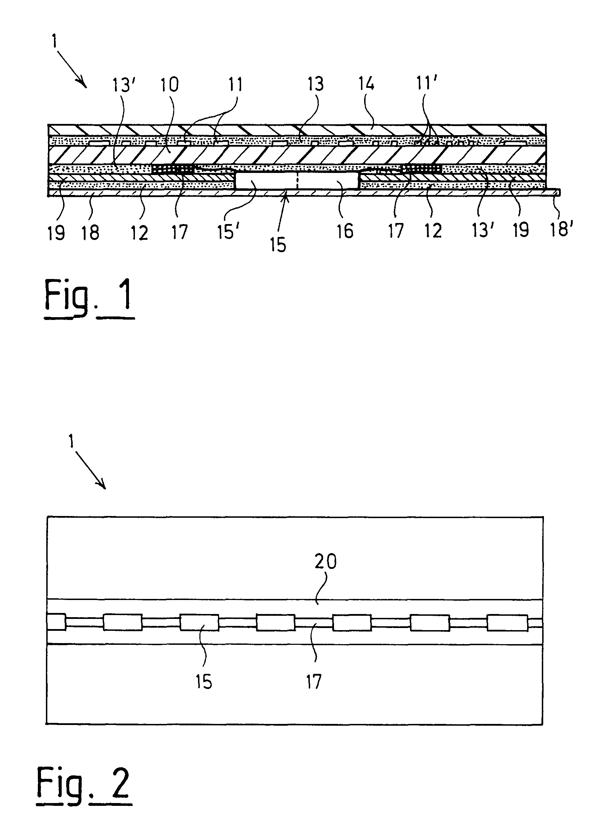

Bei dem in der Figur 1 dargestellten ersten Ausführungsbeispiel einer Plakette 1 bildet eine Trägerschicht 10 aus einer Kunststoffolie deren tragenden Teil. Oberseitig ist auf die Trägerschicht 10 eine Bedruckung oder Beschriftung 11 aufgebracht; außerdem ist neben dieser eine individuelle Kennzeichnung in Form eines Barcodes 11' angebracht, wobei sowohl die Bedruckung oder Beschriftung 11 als auch der Barcode 11' zweckmäßig in einer zur Trägerschicht 11 kontrastierenden Farbe ausgeführt sind. Über die Bedruckung oder Beschriftung 11 und den Barcode 11' ist mittels einer Klebstoffschicht 13 eine schützende Deckschicht 14 gelegt, die aus einer durchsichtigen Kunststoffolie besteht.

Unterhalb der Trägerschicht 10 befindet sich etwa mittig ein Transponder 15 möglichst flacher Bauform, wobei dieser mit seiner Oberseite mittels einer weiteren Klebstoffschicht 13' an der Unterseite der Trägerschicht 10 fixiert ist. Der Transponder 15 umfaßt hier einen Mikrochip 15' sowie einen zugeordneten Datenspeicher 16, die zusammengefaßt als ein einheitliches Bauelement, z.B. in Dünnschichttechnik, ausgebildet sind. Über elektrische Leitungen stehen der Mikrochip 15' und sein Datenspeicher 16 in Verbindung mit einer den Transponder 15 ringförmig umgebenden, flachen spulenartigen Antenne 17. Die Antenne 17 dient zur drahtlosen Zuführung elektrischer Energie zum Transponder 15 mittels Induktion und zur Übertragung von Lese- und/oder Schreib-Signalen bei einem ebenfalls kontaktlosen Auslesen oder Einschreiben von Daten aus dem oder in den Datenspeicher 16 mittels einer in die Nähe der Plakette 1 gebrachten, hier nicht dargestellten Lese- oder Schreib-/Lese-Station. Dabei ist die Antenne 17, die in Draufsicht gesehen kreisringförmig ist, unmittelbar unterhalb der Trägerschicht 10 angeordnet, ohne mit dieser fest verbunden zu sein.

Unterhalb der Klebstoffschicht 13' und unterhalb der in dieser Schicht 13' liegenden Antenne 17 schließt sich eine Zwischenschicht 19, ebenfalls aus einer Kunststofffolie, an, die in ihrer Mitte eine der Größe des Transponders 15 entsprechende Aussparung aufweist. Unterhalb der Zwischenschicht 19 folgt dann eine dritte Klebstoffschicht 12, die nach unten hin durch ein Schutzpapier 18 abgedeckt ist. Das Schutzpapier 18 besitzt an seinem in der Zeichnungsfigur rechten Rand einen kleinen Überstand 18', der das bedarfsweise Abziehen des Schutzpapiers 18 erleichtert. Das Abziehen des Schutzpapiers 18 erfolgt unmittelbar vor der Anbringung der Plakette 1 an einer Anbringungsfläche, z.B. ein Kennzeichenschild eines Kraftfahrzeugs. Die Anbringung an der Anbringungsfläche erfolgt dann mittels der nun freiliegenden Klebstoffschicht 12, die für eine festhaftende Verbindung zwischen Plakette 1 und der zugehörigen Anbringungsfläche sorgt. Da die Klebstoffschicht 12 im Bereich des Transponders 15 ebenso wie die Zwischenschicht 19 ausgespart ist, kommt es bei einem Manipulationsversuch, bei dem die Plakette 1 von der Anbringungsfläche abgehoben werden soll, dazu, daß der Transponder 15 mit der Trägerschicht 10 angehoben wird, daß aber die Zwischenschicht und die Klebstoffschicht 12 mit der Antenne 17 an der Anbringungsfläche haften bleiben, wodurch die elektrische Verbindung zwischen Transponder 15 und Antenne 17 zerstört wird. Danach ist die Plakette 1 unbrauchbar.

Zusätzlich kann die Plakette 1 in ihrer Struktur in den einzelnen Schichten so ausgeführt sein, daß bei einem Manipulationsversuch erkennbare und unumkehrbare optische und/oder mechanische Veränderungen auftreten, wie dies an sich bekannt ist.

Die in Figur 2 gezeigte Plakette 1 hat einen rechteckigen Umriß und besteht, was hier nicht sichtbar ist, wie üblich aus mehreren Schichten. In den Schichtenaufbau ist ein streifenförmiger Träger 20 integriert, der ein Abschnitt eines vorgefertigten "Endlos"-Streifens ist, der mit einer durchlaufenden Anordnung von Transpondern 15 und Antennen 17 bestückt ist. Diese durchlaufende Anordnung von Transpondern 15 und Antennen 17 kann beispielsweise drucktechnisch mittels elektrisch leitenden und/oder magnetische Eigenschaften aufweisenden Lacks erzeugt sein. Die Plakette 1 ist einfach herstellbar, weil der Träger mit den Transpondern 15 und Antennen 17 wie die weiteren Schichten der Plakette "von der Rolle" zuführbar und verarbeitbar ist. Die Funktionsfähigkeit ist sicher gegeben, sofern wenigstens ein kompletter Transponder 15 mit kompletter Antenne 17 in der Plakette 1 zu liegen kommt. Bei entsprechender Wahl der Flächengröße der Plakette einerseits und der Transponder-Antennen-Anordnung andererseits ist diese Voraussetzung problemlos erfüllbar.

## Patentansprüche

1. Plakette (1), insbesondere Zulassungs-, Prüf-, Siegel- oder Mautplakette vorzugsweise für Kraftfahrzeuge, bestehend aus einer Trägerschicht (10) aus Kunststoff, einer darauf mindestens einseitig aufgebrachten ein- oder mehrfarbigen Bedruckung und/oder Beschriftung (11) und aus einer rück- oder vorderseitig angeordneten Klebstoffschicht (12), mit der die Plakette (1) an einer Anbringungsfläche anklebbar ist,
**dadurch gekennzeichnet,**
daß in die Plakette (1) ein Transponder (15) mit einem kontaktlos elektronisch auslesbaren Datenspeicher (16) integriert ist.

2. Plakette nach Anspruch 1, dadurch gekennzeichnet,
daß der Datenspeicher (16) eine nach ihrer Speicherung nicht löschbare feste Information enthält.

3. Plakette nach Anspruch 1, dadurch gekennzeichnet,
daß der Datenspeicher (16) eine nach ihrer Speicherung löschbare oder überschreibbare oder veränderbare Information enthält.

4. Plakette nach einem der vorhergehenden Ansprüche, dadurch gekennzeichnet, daß der Transponder (15) ein aktives Rechnerelement (15'), wie Mikrochip oder -prozessor, umfaßt oder mit einem solchen, am oder nahe dem Anbringungsort der Plakette (1) vorhandenen Rechnerelement oder Rechner verbunden oder verbindbar ist.

5. Plakette nach einem der vorhergehenden Ansprüche, dadurch gekennzeichnet, daß der Transponder (15) mechanisch flexibel in Dünnschichttechnik ausgeführt ist.

6. Plakette nach einem der vorhergehenden Ansprüche, dadurch gekennzeichnet, daß der Transponder (15) eine flache spulenförmige Antenne (17) umfaßt.

7. Plakette nach einem der vorhergehenden Ansprüche, dadurch gekennzeichnet, daß die Antenne (17) ringförmig den übrigen Transponder (15) umgibt.

8. Plakette nach einem der vorhergehenden Ansprüche, dadurch gekennzeichnet, daß sie einen oder mehrere Transponder (15) und Antennen (17) aus einer auf einem streifen- oder bahnförmigen Träger (20) angebrachten vorproduzierten endlosen Transponder-/Antennen-Anordnung enthält.

9. Plakette nach einem der vorhergehenden Ansprüche, dadurch gekennzeichnet, daß der Transponder (15) und/ oder die Antenne (17) drucktechnisch mittels elektrisch leitenden und/oder magnetische Eigenschaften aufweisenden Lacks auf wenigstens eine der Schichten der Plakette (1) oder auf den streifen- oder bahnförmigen Träger (20) aufgebracht sind/ist.

10. Plakette nach einem der vorhergehenden Ansprüche, dadurch gekennzeichnet, daß der Transponder (15) und/oder die Antenne (17) zwischen wenigstens zwei Schichten der Plakette (1) eingeschlossen sind/ist.

11. Plakette nach einem der vorhergehenden Ansprüche, dadurch gekennzeichnet, daß die Information mittels stationärer oder mobiler Lese- oder Schreib-/Lese-Stationen aus dem Datenspeicher (16) auslesbar oder in den Datenspeicher (16) einschreibbar ist.

12. Plakette nach einem der vorhergehenden Ansprüche, dadurch gekennzeichnet, daß sie so ausgeführt ist, daß bei einem Ablösen der Plakette (1) von ihrer Anbringungsfläche oder des Transponders (15) von der übrigen Plakette (1) diese erkennbar und unumkehrbar mechanisch und/oder optisch verändert wird.

13. Plakette nach einem der vorhergehenden Ansprüche, dadurch gekennzeichnet, daß diese mit einer zuzsätzlichen, unabhängig vom Transponder (15) ablesbaren individuellen Kennzeichnung (11') versehen ist.

14. Plakette nach Anspruch 13, dadurch gekennzeichnet, daß die Kennzeichnung (11') in Form eines Barcodes angebracht ist.

15. Plakette nach Anspruch 13 oder 14, dadurch gekennzeichnet, daß die Kennzeichnung (11') optisch erkennbar in einer kontrastierenden Farbe oder optisch unsichtbar in einer nur unter IR- oder UV-Bestrahlung optisch oder durch ein Lesegerät erkennbaren Farbe oder optisch unsichtbar in einer nur durch ein für Magnetfelder sensitives Lesegerät erkennbaren, magnetische oder magnetisierbare Partikel enthaltenden Farbe angebracht ist.

16. Plakette nach einem der Ansprüche 13 bis 15, dadurch gekennzeichnet, daß die Kennzeichnung (11') eine fortlaufende Numerierung ist oder enthält.
